# EUROPEAN PATENT APPLICATION

(11) **EP 1 900 622 A2**
(43) Date of publication of application: **19.03.2008**
(21) Application number: 07018108.6
(22) Date of filing: 14.09.2007
(51) Int. Cl.: B62J 27/00

(54) **Two-wheeled vehicle**

(30) Priority: 15.09.2006 JP 2006250518
(71) Applicant: Yamaha Hatsudoki Kabushiki Kaisha, Iwata-shi, Shizuoka-ken 438-8501 (JP)
(72) Inventor: Kobayashi, Kenji, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a two-wheeled vehicle comprising a guard frame (22), said guard frame being composed of a longitudinally extending bar member (41), wherein end parts (41a,41b) of the bar member are attached to a vehicle's body, wherein the bar member is curved to the outside in a vehicle width direction and wherein a middle part (41c) of the bar member is bendable.

## Description

The present invention relates to a two-wheeled vehicle, such as a motorcycle, with a guard frame for preventing damage to outside parts of a vehicle body in an overturn of the vehicle body.

As disclosed in Patent Document 1 for example, one conventional motorcycle is provided with protectors for preventing damage to an outermost part of a vehicle body in an overturn of the motorcycle. The protector of the motorcycle disclosed in Patent Document 1 is attached to an outermost part of a body frame in a vehicle width direction to project toward the lateral side. In an overturn of the vehicle body, the protector will contact a road surface to support the vehicle body, thereby preventing damage to the other parts of the vehicle body due to their contacting the road surface. The protector can be formed of iron, aluminum or synthetic resin.

Both lateral sides of the body frame with the protectors extend in the longitudinal direction of the vehicle body on both lateral sides of a cylinder head of an engine, and are connected to both lateral sides of the cylinder head. That is, both lateral sides of the body frame are connected to each other via the engine.

In the above conventional motorcycle with the protectors, the protector will contact the road surface to support the vehicle body in an overturn of the motorcycle. The reaction force applied to the protector from the road surface will be transmitted from the ground side to the opposite side of the body frame via the cylinder head. Thus, this motorcycle can receive the above reaction force from the road surface on both lateral sides of the body frame.

Patent Document 1: JP-A-Hei 8-198158

Unfortunately, in the motorcycle disclosed in Patent Document 1, the protector is securely connected to the body frame, and the cylinder head is securely connected to the body frame. Accordingly, when the motorcycle overturns, any shock applied to the protector will be transmitted from the body frame to the cylinder head. In this motorcycle, therefore, the body frame or the cylinder head may undergo shock in an overturn, resulting in damage to those parts.

In view of the foregoing problems, it is, therefore, an object of the present invention to provide a two-wheeled vehicle, such as a motorcycle, in which any overturn shock is well reduced, thereby reliably preventing damage to the parts in an overturn of the two-wheeled vehicle.

This objective is solved in an inventive manner by a two-wheeled vehicle comprising a guard frame, said guard frame being composed of a longitudinally extending bar member, wherein end parts of the bar member are attached to a vehicle's body, wherein the bar member is curved to the outside in a vehicle width direction and wherein a middle part of the bar member is bendable.

Preferably, the middle part of the bar member is formed of a material having a lower rigidity than a material of its end parts

Further, preferably the guard frame is composed of a pair of longitudinally extending bar members, wherein first ends of the bar members are interconnected by a connecting part such that the guard frame is in a general U-shape, as seen in plan view, that is open in the longitudinal direction of the vehicle body.

Still further, preferably respective second ends of the bar members are fixed to the body frame, and wherein the connecting part is supported by the body frame for pivotal movement of a vertical axis.

Therein, it is beneficial if the longitudinal middle part of the bar member is formed of an elastic member composed of a non-metallic material.

Further, it is beneficial if the middle part of the bar member and a vehicle component on the inside of the middle part in the vehicle width direction define a space therebetween which allows a user to grip the middle part by hand.

Still further, it is beneficial if the guard frame includes a pair of left and right horizontal bar members, each bar extending in the longitudinal direction of the vehicle.

Yet further still, it is beneficial if the connecting part connects the rear ends of the horizontally extending bar members.

Preferably, the horizontal bar members are in a bow shape projecting to the outside in the vehicle width direction, wherein the longitudinal middle part of the horizontal bar members is formed of a material having lower rigidity than a material of the front and rear ends and thereof.

In the following, the present invention is explained in greater detail with respect to several embodiments thereof in conjunction with the accompanying drawings, wherein:
- FIG. 1: is a side elevation of a motorcycle according to an embodiment,
- FIG. 2: is a front elevation of the motorcycle according to the present embodiment,
- FIG. 3: is a plan view of the motorcycle according to the present embodiment,
- FIG. 4: is a perspective view of the motorcycle according to the present embodiment,
- FIG. 5: is a front elevation illustrating the state where the motorcycle has overturned,
- FIG. 6: is a perspective view of a guard frame,
- FIG. 7: is an enlarged cross-sectional view of a bonding part between a middle part and an end of a horizontal bar, and
- FIGs. 8: are plan views for explaining the manner in which the guard frame resiliently deforms.

Description of Reference Numerals and Symbols:
1: motorcycle
14: hydrogen cylinder
21: body frame
22: guard frame
33: upper pipe
41: horizontal bar
41a: front end
41b: rear end
41c: middle part
42: connecting part
47: attachment bolt
55: connecting bolt

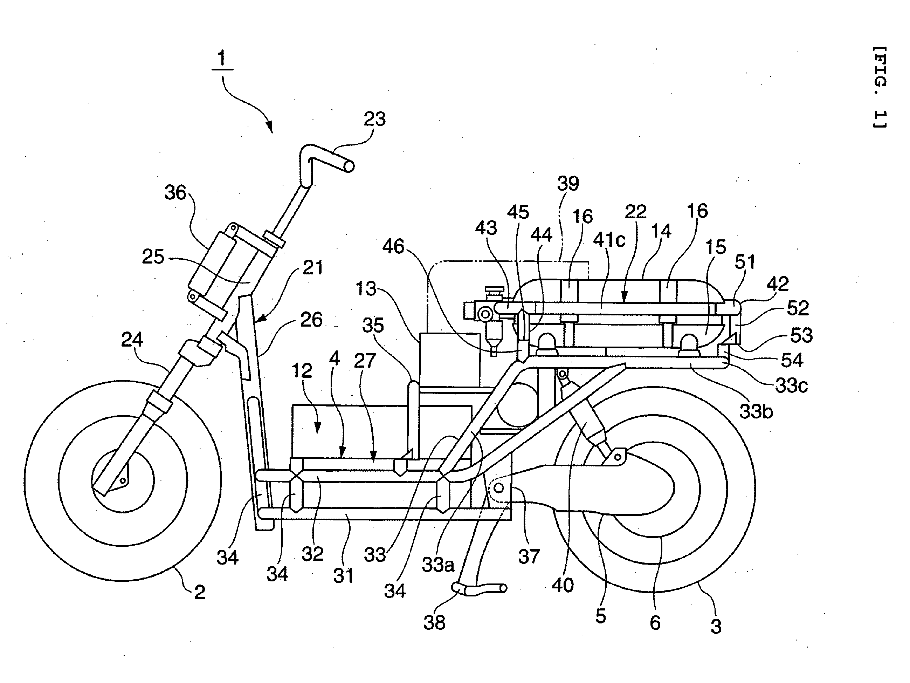

An embodiment of a motorcycle according to the present teaching will now be described in detail with reference to FiGs. 1 to 8.

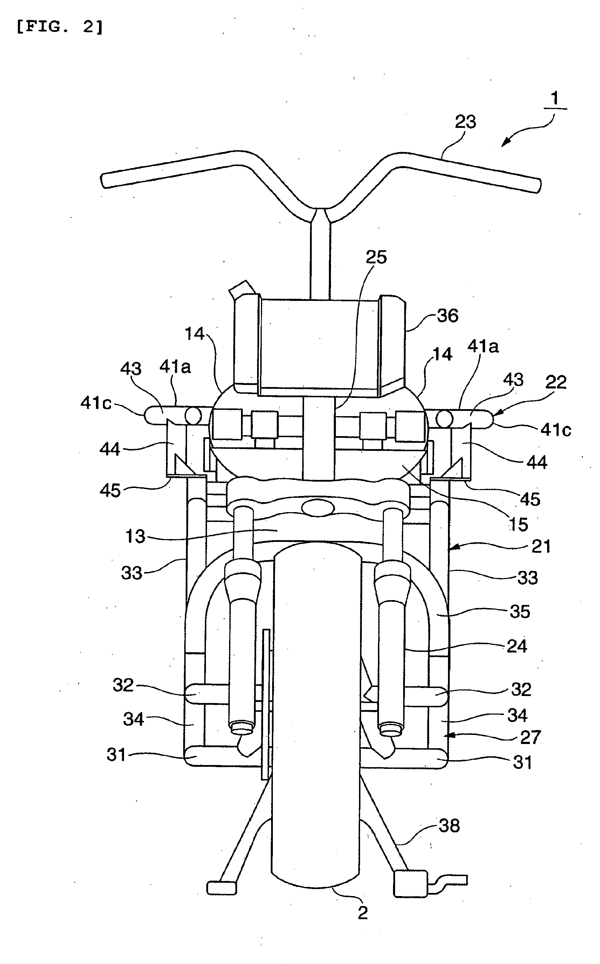

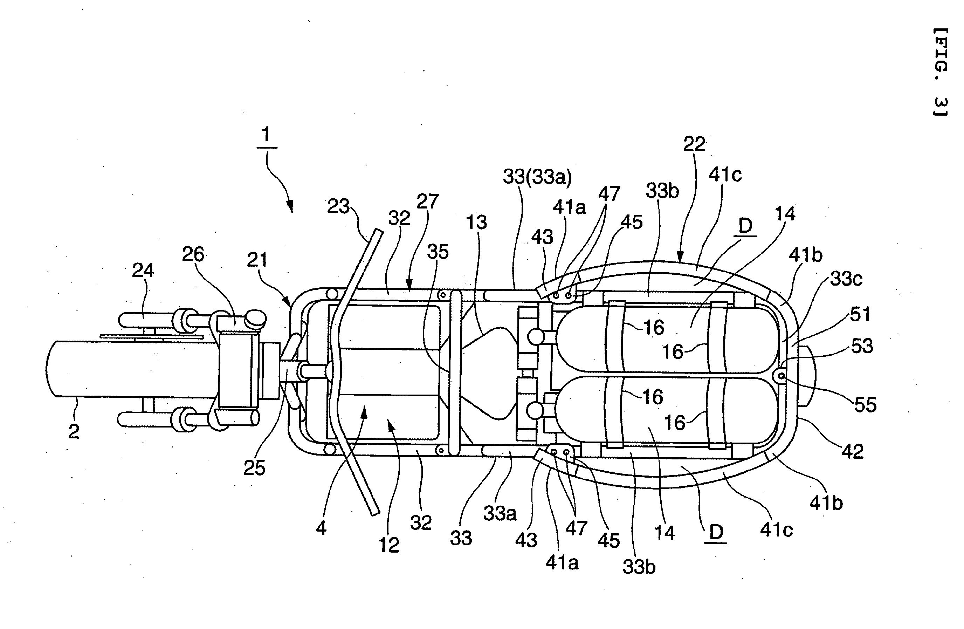

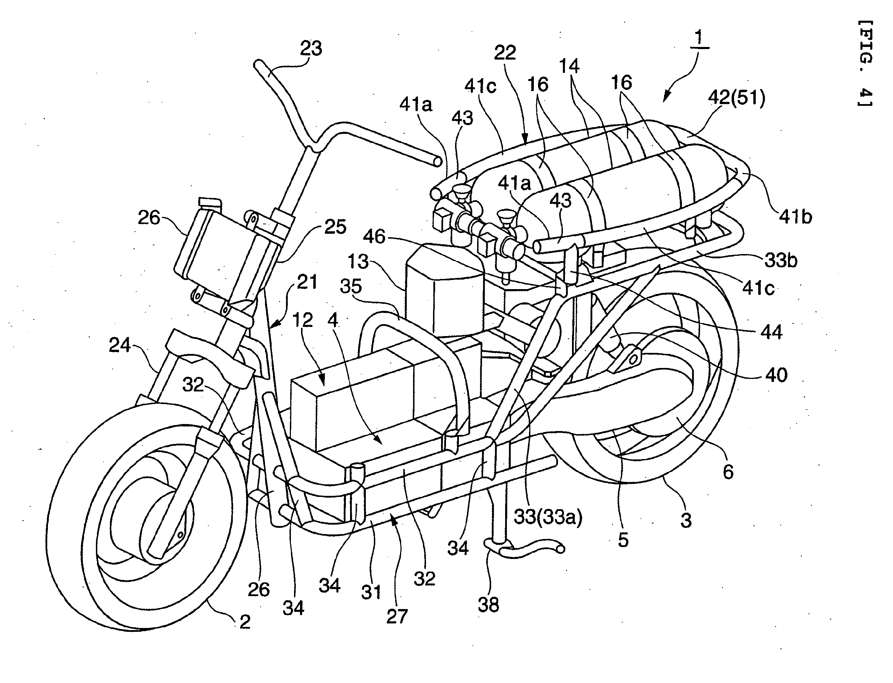

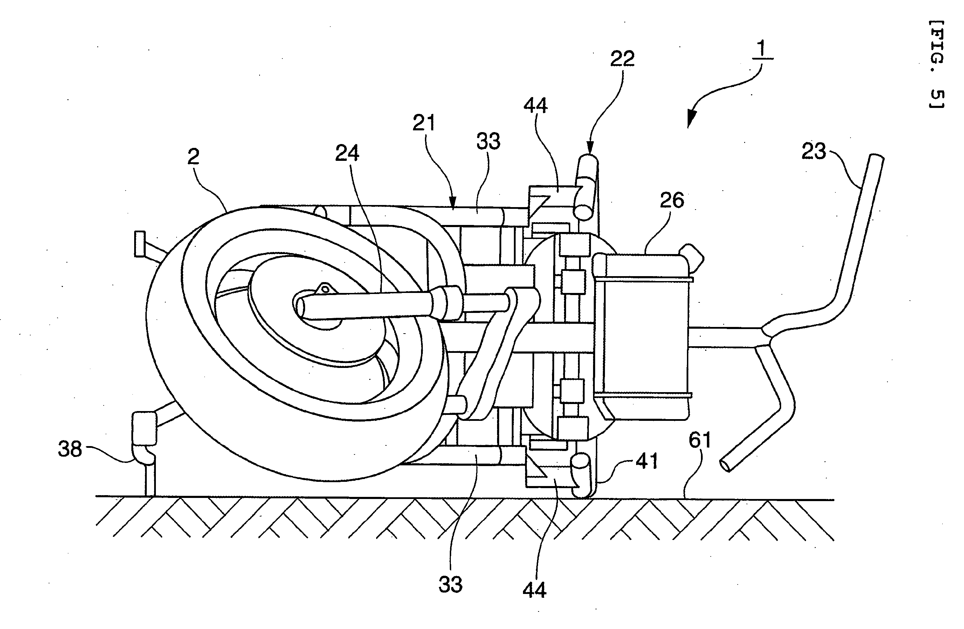

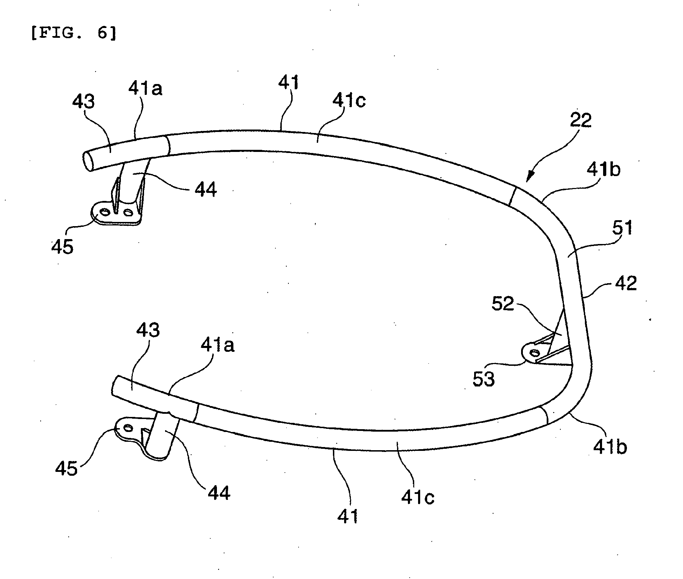

FIG. 1 is a side elevation of a motorcycle according to the present embodiment; FIG. 2 is a front elevation of FIG. 1; FIG. 3 is a plan view of FIG. 1; and FIG. 4 is a perspective view of FIG. 1. FIG. 5 is a front elevation illustrating the state where the motorcycle has overturned, and FIG. 6 is a perspective view of a guard frame.

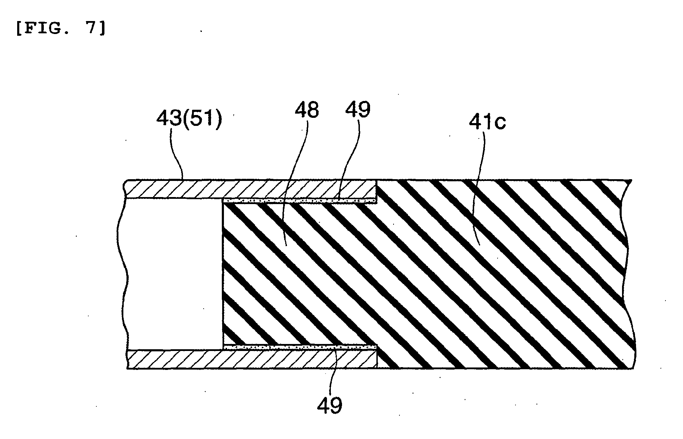

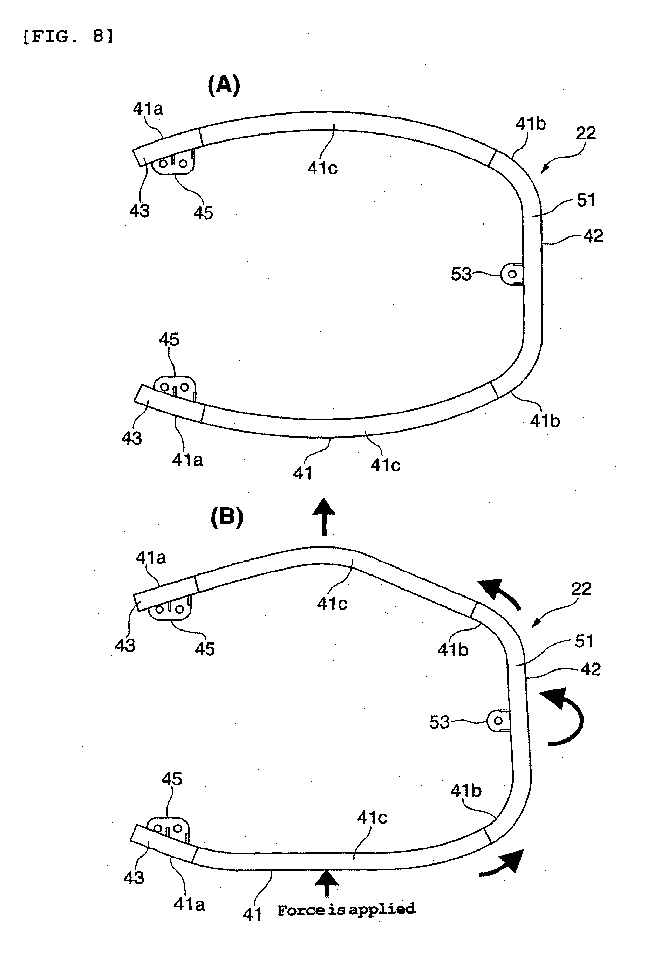

FIG. 7 is an enlarged cross-sectional view of a bonding part between a middle part and an end of a horizontal bar; and FIGs. 8(A) and 8(B) are plan views for explaining the manner in which the guard frame resiliently deforms, in which FIG. 8(A) illustrates the state before the motorcycle overturns and FIG. 8(B) illustrates the state when the motorcycle has overturned.

In the drawings, reference numeral 1 indicates a motorcycle in accordance with this embodiment of the present teaching. The motorcycle 1 is of a scooter-type, and has a low-height footrest 4 between a front wheel 2 and a rear wheel 3. The motorcycle 1 is driven by a motor 6 provided in a rear arm 5 as the motor 6 rotates the rear wheel 3. It is considered that the present teaching can be applied to common types of motorcycles (not shown) with an engine for driving the rear wheel, as well as electric two-wheeled vehicles using the motor 6 as a drive source as shown in this embodiment.

The motor 6 is provided at the rear end of the rear arm 5, and rotates an axle (not shown) of the rear wheel 3. A fuel cell unit 12 and a battery 13 charged by the fuel cell unit 12 are used as a power source for the motor 6. The fuel cell unit 12 is installed on the footrest 4, and has fuel cells included therein. The fuel cell unit 12 can generate electricity using hydrogen supplied from two hydrogen cylinders 14 provided at a rear part of a vehicle body and oxygen in the ambient atmosphere.

The two hydrogen cylinders 14, 14 are each placed on a tank holder 15 at the rear part of the vehicle body to be arranged side by side in a vehicle width direction while directing in a longitudinal direction of the vehicle body. Each hydrogen cylinder 14 is tightly bound and fixed to the tank holder 15 with bands 16. In the motorcycle 1 in accordance with this embodiment, to protect the hydrogen cylinders 14, a guard frame 22, which is an important part of the present embodiment, is attached to a rear part of a body frame 21, which will be described below.

As shown in FIGs. 1 to 4, the body frame 21 of the motorcycle 1 includes a head pipe 25 for supporting a steering handlebar 23 and front forks 24 for steering movement, a down tube 26 extending downward from the head pipe 25, and a main frame 27 made up of a plurality of pipes welded to a lower part of the down tube 26.

The main frame 27 is made up of a pair of left and right lower pipes 31, a pair of left and right middle pipes 32, an upper pipe 33, a plurality of reinforcement pipes 34, a cross member 35 and the like. The lower pipes 31 are welded to the lower end of the down tube 26. The middle pipes 32 are welded to the down tube 26 in a position above the lower pipes 31. The upper pipe 33 is welded to middle parts of the middle pipes 32 and extend upward.

To the head pipe 25, a radiator 36 is attached through which coolant for cooling the fuel cell unit 12 flows.

As shown in FIG. 3, on the front side of the vehicle body, the lower pipes 31 and the middle pipes 32 are formed to extend rearward while passing by both lateral sides of the footrest 4. The middle pipe 32 is angled at a part corresponding to the rear end of the footrest 4 and extends obliquely upward and rearward.

This inclined part of the middle pipe 32 supports the rear arm 5 via a rear arm bracket 37 for vertical pivotal movement. To the rear arm 5, a main stand 38 is pivotally attached. In FIGs. 1, 2, 4 and 5, the main stand 38 is shown in a standing position.

The upper pipe 33 includes a pair of left and right front parts 33a and 33a, a pair of left and right rear parts 33b and 33b, and a lateral part 33c. The paired left and right front parts 33a and 33a extend obliquely upward and rearward from the respective middle pipes 32 in proximity to front parts of the angled parts of the middle pipes 32. The paired left and right rear parts 33b and 33b extend generally horizontally in the longitudinal direction of the vehicle body in a position above the rear wheel 3, as seen in the side view. The lateral part 33c connects the rear ends of the rear parts 33b, 33b. As seen in the plan view, the upper pipe is in a U-configuration that is open forward.

As shown in FIG. 3, the width of the upper pipe 33 in the vehicle width direction is set to be the same as the width between the paired left and right middle pipes 32.

In a position above the front parts of the upper pipe 33, a seat 39 to be straddled by a rider (not shown) is provided. A rear cushion unit 40 is disposed between the left rear part 33b of the upper pipe 33 and the rear arm 5. To the rear part 33b of the upper pipe 33, the tank holder 15 described above is attached. The rear part 33b is welded at the longitudinal middle to the rear end of the middle pipe 32 to be supported by the middle pipe 32 from below.

As shown in FIGs. 3 and 6, the guard frame 22 includes a pair of left and right horizontal bars 41 extending in the longitudinal direction of the vehicle body, and a connecting part 42 for connecting the rear ends of the horizontal bars 41. As seen in the plan view, the guard frame 22 is in a U-configuration that is open forward and bulged in the middle.

Each horizontal bar 41 has a front end 41 a and a rear end 41 b both made of metal. A longitudinal middle part 41 c between the front and rear ends 41 a and 41 b of the horizontal bar 41 is formed of a material having lower rigidity than that of the front and rear ends 41 a and 41 b. The middle part 41 c in accordance with this embodiment is formed of hard rubber.

The middle part 41 c is formed by a solid bar formed of hard rubber into a certain shape. As shown in FIGs. 3 and 8(A), the horizontal bar 41 having the middle part 41 c has an arcuate shape projecting to the outside in the vehicle width direction, as seen in the plan view. The middle part 41 c is formed into an arcuate shape as described above such that the middle part 41c and the hydrogen cylinder 14 define a space D (see FIG. 3) therebetween which allows a user to grip the middle part 41 c by hand. Also, the middle part 41 c is formed to be positioned in an outermost point in the vehicle width direction in the rear part 33b of the vehicle body when the guard frame 22 is attached to the body frame 21.

As shown in FIG. 6, the front end 41a of the horizontal bar 41 is formed by a horizontal pipe 43 bonded to the middle part 41 c to extend forward therefrom. To the horizontal pipe 43, a vertical pipe 44 extending downward is welded. The vertical pipe 44 has a lower end to which an attachment plate 45 is welded. As shown in FIGs. 1 and 4, the attachment plate 45 is attached to a supporting boss 46 projecting from the rear part 33b of the upper pipe 33 with attachment bolts 47 (see FIG. 3).

The length of the vertical pipe 44 is set such that as shown in FIG. 1, the middle part 41 c is positioned to face a generally middle part in the vertical direction of the hydrogen cylinder 14 (part that projects to an outermost position) when the attachment plate 45 is attached to the supporting boss 46. As shown in FIG. 7, a bonding part between the horizontal pipe 43 and the middle part 41 c is structured such that a small-diameter part 48 of the middle part 41 c is fitted in the horizontal pipe 43 and bonded thereto with an adhesive 49 in the fitting part.

As shown in FIG. 6, the connecting part 42 includes a horizontal pipe 51 extending in the vehicle width direction, a vertical pipe 52 welded to the middle of the horizontal pipe 51 in the vehicle width direction to extend downward, and an attachment plate 53 welded to the lower end of the vertical pipe 52. The rear ends 41 b of the horizontal bars 41 are formed by both ends of the horizontal pipe 51 of the connecting part 42. More specifically, both ends of the horizontal pipe 51 are angled to direct forward, and bonded respectively to the middle part 41 c on the left of the vehicle body and to the middle part 41 c on the right.

These bonding parts are structured in the same manner as the boding part between the front end 41a and the middle part 41c (see FIG. 7). The vertical pipe 52 of the connecting part 42 has a length such that the middle parts 41 c are positioned generally horizontally.

As shown in FIG. 1, the attachment plate 53 of the connecting part 42 is attached to a support member 54 projecting from the lateral part 33c of the upper pipe 33 with a connecting bolt 55 (see FIG. 3), for pivotal movement about a vertical axis. The support member 54 is disposed at the middle of the lateral part 33c in the vehicle width direction, and pivotally supports the connecting part 42.

Since the front ends 41 a of the paired left and right horizontal bars 41 and the connecting part 42 are attached individually to the upper pipe 33, the guard frame 22 in accordance with this embodiment is provided at an upper part of the vehicle body and in a position where the guard frame 22 surrounds the hydrogen cylinders 14 on both lateral sides and on the rear side thereof.

Regarding the motorcycle 1 with the guard frame 22 structured as described above, if the motorcycle overturns to the left when using the main stand 38 for example, the left horizontal bar 41 of the guard frame 22 will contact a road surface 61, as shown in FIG. 5. In this case, the motorcycle will be supported on the guard frame 22 and the main stand 38. At this time, the steering handlebar 23 will contact the road surface 61 without undergoing vehicle weight.

If the vehicle body has overturned in this way, the guide frame 22 will deform from a normal state shown in FIG. 8(A) to a damping state shown in FIG. 8(B). That is, the middle part 41 c of the left horizontal bar 41 will resiliently deform to extend longitudinally as it is pushed against the road surface. In other words, the middle part 41c will resiliently deform from a bow shape to a generally straight shape, while pushing the left end of the connecting part 42 rearward.

As being pushed by the horizontal bar 41 on the left of the vehicle body (on the ground side) in this way, the connecting part 42 will tilt in a manner pivoting in the counterclockwise direction about the connecting bolt 55, as seen in the plan view, thereby pushing the rear end 41 b of the right horizontal bar 41 forward. As being pushed forward at the rear end 41 b by the connecting part 42, the right horizontal bar 41 will be compressed longitudinally, so that it will resiliently deform to project further outwardly of the vehicle body at the middle part 41 c having an arcuate shape as seen in the plan view.

Thus, in the motorcycle 1 in accordance with this embodiment, the middle parts 41c of the two horizontal bars 41 resiliently deform individually in an overturn of the motorcycle. As a result, any overturn shock to the motorcycle is well reduced by the middle parts 41c. Therefore, in accordance with this embodiment, the present teaching enables manufacture of the motorcycle 1 in which any damage to the hydrogen cylinders 14 in an overturn of the motorcycle is reliably prevented.

In this embodiment, the middle parts 41 c of the guard frame 22 are formed of hard rubber. As a result, no rust will form on any damaged part of the middle parts 41 due to their contacting the road surface, and thus no external appearance of the motorcycle deteriorates.

In this embodiment, the middle part 41 c of the guard frame 22 and the hydrogen cylinder 14 define the space D therebetween which allows the user to grip the middle part 41 c by hand. As a result, the user can grip the middle part 41 c by hand. Thus, it is possible to use the horizontal bar 41 as a grab bar or a stand handle.

The middle part 41 c is formed of hard rubber, or an insulation material. As a result, even when the vehicle body is electrostatically charged, any electrostatic discharge through the user's hand gripping the middle part 41 c is prevented. Additionally, in case of an electric leakage in the power supply system of the motor 6 in the electric motorcycle 1 for example, the user is prevented from getting an electric shock when gripping the middle part 41 c.

In the foregoing embodiment, the middle part 41 c of the guard frame 22 formed of hard rubber is shown. It is understood, however, that any suitable material can be used as the material of the middle part 41 c having lower rigidity than that of the components of the vehicle body, such as the body frame 21, and which resiliently deforms to push the connecting part 42 in an overturn of the motorcycle. For example, it is considered that the middle part 41 c can be formed using synthetic resin as a nonmetallic material besides hard rubber or formed of a metallic spring material. It is also understood that the middle part 41 c may not be in the solid bar-shape having a circular cross section shown in the foregoing embodiment but can be modified to any suitable shape.

The description above discloses (amongst others), in order to achieve the above object, an embodiment of a motorcycle including a guard frame at an upper part of a vehicle body, the guard frame including: a pair of left and right horizontal bars, each bar extending in a longitudinal direction of the vehicle body; and a connecting part connecting first ends of the horizontal bars such that the guard frame is in a generally U-shape, as seen in a plan view, that is open in the longitudinal direction of the vehicle body, in which a second end of each horizontal bar is fixed to a body frame; the connecting part is supported at the middle in a vehicle width direction by the body frame for pivotal movement about a vertical axis; each horizontal bar is in a bow shape projecting to the outside in the vehicle width direction; and a longitudinal middle part of each horizontal bar is formed of a material having lower rigidity than a material of the first and second ends thereof (first embodiment).

A second embodiment provides the motorcycle in accordance with the first embodiment, in which the longitudinal middle part of each horizontal bar is formed of an elastic member composed of a non-metallic material.

A third embodiment provides the motorcycle in accordance with the first or second embodiments, in which the middle part of each horizontal bar and a vehicle component on the inside of the middle part in the vehicle width direction define a space therebetween which allows a user to grip the middle part by hand.

According to the effect of the present teaching, when the vehicle body has overturned, the longitudinal middle part of one of the horizontal bars will contact the road surface. The horizontal bar on the ground side will resiliently deform from a bow shape to a generally straight shape while pushing the connecting part of the guard frame by contacting the road surface. At this time, since the connecting part is pushed by the horizontal bar on the ground side, it will pivot about a vertical axis to thereby push the other horizontal bar. As the other horizontal bar is pushed at one end connected to the connecting part, it will be compressed longitudinally, so that it will resiliently deform to project further outwardly of the vehicle body at its middle part.

Thus, according to the present teaching, the middle parts of the two horizontal bars resiliently deform individually in an overturn of the motorcycle. As a result, any overturn shock to the motorcycle is well reduced by the middle parts. Therefore, the present teaching can provide a motorcycle in which any damage to the parts in an overturn of the motorcycle is reliably prevented.

In accordance with the second embodiment, no rust will form on any damaged part of the middle parts of the horizontal bars due to their contacting the road surface, and thus no external appearance of the motorcycle deteriorates.

In accordance with the third embodiment, since the user can grip the middle part of the horizontal bar by hand, it is possible to use the horizontal bar as a grab bar or a stand handle.

Further, since the middle part of each horizontal bar is formed of an insulation material such as synthetic resin or hard rubber, if the vehicle body is electrostatically charged, any electrostatic discharge through the user's hand gripping the middle part is prevented.

The description above further discloses, in order to provide a motorcycle in which any overturn shock is well reduced, thereby reliably preventing damage to the parts in an overturn of the motorcycle, an embodiment of a guard frame 22 which is provided at an upper part of a vehicle body. The guard frame 22 includes a pair of left and right horizontal bars 41, each bar extending in a longitudinal direction of the vehicle body; and a connecting part 42 connecting the rear ends 41 b of the horizontal bars 41. The guard frame is in a generally U-shape, as seen in the plan view, that is open forward of the vehicle body. The front end 41 a of each horizontal bar 41 is fixed to a body frame 21. The connecting part 42 is supported at the middle in a vehicle width direction by the body frame 21 for pivotal movement about a vertical axis. The horizontal bar 41 is in a bow shape projecting to the outside in the vehicle width direction. A longitudinal middle part 41 c of the horizontal bar 41 is formed of a material having lower rigidity than a material of the front and rear ends 41 a and 41 b.

The description above still further discloses, according to a preferred first aspect, a motorcycle comprising a guard frame at an upper part of a vehicle body, the guard frame including: a pair of left and right horizontal bars, each bar extending in a longitudinal direction of the vehicle body; and a connecting part connecting first ends of the horizontal bars such that the guard frame is in a generally U-shape, as seen in a plan view, that is open in the longitudinal direction of the vehicle body, wherein: a second end of each horizontal bar is fixed to a body frame; the connecting part is supported at the middle in a vehicle width direction by the body frame for pivotal movement about a vertical axis; each horizontal bar is in a bow shape projecting to the outside in the vehicle width direction; and a longitudinal middle part of each horizontal bar is formed of a material having lower rigidity than a material of the first and second ends thereof.

Further, according to a preferred second aspect, the longitudinal middle part of each horizontal bar is formed of an elastic member composed of a non-metallic material.

Further, according to a preferred third aspect, the middle part of each horizontal bar and a vehicle component on the inside of the middle part in the vehicle width direction define a space therebetween which allows a user to grip the middle part by hand.

## Claims

1. Two-wheeled vehicle comprising a guard frame, said guard frame being composed of a longitudinally extending bar member, wherein end parts of the bar member are attached to a vehicle's body, wherein the bar member is curved to the outside in a vehicle width direction and wherein a middle part of the bar member is bendable.

2. Two-wheeled vehicle according to claim 1, wherein the middle part of the bar member is formed of a material having a lower rigidity than a material of its end parts

3. Two-wheeled vehicle according to claim 1 or 2, wherein the guard frame is composed of a pair of longitudinally extending bar members, wherein first ends of the bar members are interconnected by a connecting part such that the guard frame is in a general U-shape, as seen in plan view, that is open in the longitudinal direction of the vehicle body.

4. Two-wheeled vehicle according to claim 3, wherein respective second ends of the bar members are fixed to the body frame, and wherein the connecting part is supported by the body frame for pivotal movement of a vertical axis.

5. Two-wheeled vehicle according to one of the claims 1 to 4, wherein the longitudinal middle part of the bar member is formed of an elastic member composed of a non-metallic material.

6. Two-wheeled vehicle according to one of the claims 1 to 5, wherein the middle part of the bar member and a vehicle component on the inside of the middle part in the vehicle width direction define a space therebetween which allows a user to grip the middle part by hand.

7. Two-wheeled vehicle according to one of the claims 1 to 6, wherein the guard frame (22) includes a pair of left and right horizontal bar members (41), each bar extending in the longitudinal direction of the vehicle.

8. Two-wheeled vehicle according to claim 7, wherein the connecting part (42) connects the rear ends of the horizontally extending bar members (41).

9. Two-wheeled vehicle according to claim 7 or 8, wherein the horizontal bar members (41) are in a bow shape projecting to the outside in the vehicle width direction, wherein the longitudinal middle part (41 c) of the horizontal bar members (41) is formed of a material having lower rigidity than a material of the front and rear ends (41 a) and (41 b) thereof.
